(19) **Europäisches Patentamt**
**European Patent Office**
**Office européen des brevets**

(11) **EP 4 660 887 A1**

(12) # EUROPÄISCHE PATENTANMELDUNG

(43) Veröffentlichungstag:
**10.12.2025   Patentblatt 2025/50**

(21) Anmeldenummer: **24180302.2**

(22) Anmeldetag: **05.06.2024**

(51) Internationale Patentklassifikation (IPC):
**G06N 3/09** (2023.01)      **G06N 20/00** (2019.01)

(52) Gemeinsame Patentklassifikation (CPC):
**G06N 20/00; G06N 3/045; G06N 3/08; G06N 3/09**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH**
**70442 Stuttgart (DE)**

(72) Erfinder:
• **Schmidt, Eric Sebastian**
  **71296 Heimsheim (DE)**
• **Lindt, Stefan Patrick**
  **76275 Ettlingen (DE)**
• **Haug, Johannes**
  **72108 Rottenburg (DE)**

Bemerkungen:
Geänderte Patentansprüche gemäss Regel 137(2) EPÜ.

(54) **VERFAHREN ZUM TRAINIEREN EINES MASCHINELLEN LERNMODELLS ZUM KLASSIFIZIE-REN VON ZEITREIHEN VON SENSORDATEN**

(57)    Gemäß verschiedenen Ausführungsformen wird ein Verfahren zum Trainieren eines maschinellen Lernmodells zum Klassifizieren von Zeitreihen von Sensordaten beschreiben, aufweisend, für jedes Trainingsbeispiel einer Menge von Trainingsbeispielen, Erzeugen mindestens eines zusätzlichen Trainingsbeispiels durch, für jedes zusätzliche Trainingsbeispiel Erzeugen einer Folge von Gewichten, die für jeden Zeitindex einer Folge von Zeitindizes des Trainingsbeispiels ein Gewicht aufweist, Gewichten, für jeden Zeitindex bis auf den letzten Zeitindex der Folge von Zeitindizes, eines Zeitinkrements zum auf den Zeitindex folgenden Zeitindex mit dem Gewicht, das die Folge von Gewichten für den Zeitindex aufweist und/oder Gewichten, für jeden Zeitindex eines Werts des Trainingsbeispiels für den Zeitindex und Trainieren des maschinellen Lernmodells mittels eines Trainingsdatensatzes, der mindestens die zusätzlichen Trainingsbeispiele enthält.

Fig. 1

EP 4 660 887 A1

**Beschreibung**

Die vorliegende Offenbarung bezieht sich auf Verfahren zum Trainieren eines maschinellen Lernmodells zum Klassifizieren von Zeitreihen von Sensordaten.

Bei Herstellungsprozessen ist es von Interesse, mit geringem Aufwand feststellen zu können, ob ein hergestelltes Endprodukt fehlerhaft ist oder nicht. Dabei kann ein maschinelles Lernmodell helfen, das auf der Grundlage von Sensordaten, die bei dem Herstellungsprozess oder auch anhand des Endprodukts erfasst werden, eine Vorhersage trifft, ob das Endprodukt fehlerhaft ist. Als fehlerhafte Produkte können dann beispielsweise einer genaueren Untersuchung unterzogen werden (oder auch aussortiert werden, wenn der Aufwand der genaueren Untersuchung sich nicht lohnt). Ein solches maschinelles Lernmodell muss aber, um hilfreich zu sein, geeignet trainiert werden, wofür typischerweise eine hohe Zahl von Trainingsbeispielen erforderlich ist. Bei Herstellungsprozessen besteht dabei eine Schwierigkeit darin, dass normalerweise viel mehr Produkte nicht fehlerhaft sind als fehlerhaft sind und damit die Klasse der fehlerhaften Trainingsbeispiele, wenn sie anhand von Ausführungen des jeweiligen Herstellungsprozesses erzeugt werden, unterrepräsentiert sind.

Es sind deshalb Trainingsverfahren für Klassifikationsmodelle (insbesondere Anomalieerkennungsmodelle) wünschenswert, die auch bei einem Ungleichgewicht von Klassen in den zur Verfügung stehenden Trainingsbeispielen gute Trainingsergebnisse liefern.

Gemäß verschiedenen Ausführungsformen wird ein Verfahren zum Trainieren eines maschinellen Lernmodells zum Klassifizieren von Zeitreihen von Sensordaten bereitgestellt, aufweisend:

- Für jedes Trainingsbeispiel einer Menge von Trainingsbeispielen, wobei jedes Trainingsbeispiel eine Trainings-Zeitreihe für das maschinelle Lernmodell und eine Zielausgabe des maschinellen Lernmodells aufweist, wobei die Trainings-Zeitreihe für jeden Zeitindex einer Folge von Zeitindizes einen Wert für jede mindestens einer Dimension eines Wertebereichs aufweist, wobei zwei in der Folge von Zeitindizes aufeinanderfolgende Zeitindizes sich um ein Zeitinkrement unterscheiden, Erzeugen mindestens eines zusätzlichen Trainingsbeispiels durch, für jedes zusätzliche Trainingsbeispiel,

  ◦ Erzeugen einer Folge von Gewichten, die für jeden Zeitindex der Folge von Zeitindizes ein Gewicht aufweist;
  ◦ Gewichten, für jeden Zeitindex bis auf den letzten Zeitindex der Folge von Zeitindizes, des Zeitinkrements zum auf den Zeitindex folgenden Zeitindex mit dem Gewicht, das die Folge von Gewichten für den Zeitindex aufweist und/oder
  ◦ Gewichten, für jeden Zeitindex der Folge von Zeitindizes des Trainingsbeispiels und jede der mindestes einen Dimension des Wertebereichs, des Werts, den die Trainings-Zeitreihe des Trainingsbeispiels für den Zeitindex und für die Dimension mit dem Gewicht, das die Folge von Gewichten für den Zeitindex aufweist; und

- Trainieren des maschinellen Lernmodells mittels eines Trainingsdatensatzes, der mindestens die zusätzlichen Trainingsbeispiele enthält.

Das oben beschriebene Verfahren ermöglicht ein besseres Training durch Verwendung zusätzlicher Trainings-Zeitreihen, die durch Verzerrungen der Zeitachse und/oder der Werteachse (oder Werteachsen im Fall mehrdimensionaler Zeitreihen) erzeugt werden.

Gegenüber der üblichen Alternative, der Erzeugung synthetischer Zeitreihen auf der Grundlage von GANs (Generative Adversarial Networks),

- erfordert das obige Verfahren keine Anpassung eines generativen maschinellen Lernmodells an den Anwendungsfall, was ihr einen grundlegenden rechnerischen Vorteil gegenüber GANs verschafft.
- erfordert das obige Verfahren lediglich den Zugang zu einer Menge von Trainings-Zeitreihen als Basis für die Erzeugung zusätzlicher Trainings-Zeitreihen (eine Trainings-Zeitreihe ist eine ein- oder mehrdimensionale Zeitreihe, die beispielsweise einem wiederholbaren Produktionsprozess entspricht, z. B. eine (diskrete) Schraub- oder Temperaturkurve)
- ist, während GANs typischerweise eine Blackbox sind, das obige Verfahren sehr gut interpretierbar.
- Bestehen beim dem obigen Verfahren nicht die Schwierigkeiten wie bei GANs, die Glätte realer Daten nachzubilden. Im Allgemeinen funktionieren GANs gut mit klassischen Zeitreihen, die stationär sind (nach Korrektur von potenzieller Drift und Saisonalität). Infolgedessen gelingt es den GANs oft nicht, realistisch aussehende, wiederholbare Zeitreihen zu erzeugen (oder sie erfordern eine umfangreiche Abstimmung der Hyperparameter, um Realismus zu erreichen). Das obige Verfahren erzeugt realistische Zeitreihen, da es einfache Manipulationen entlang der Zeit- und/oder Werteachse vornimmt und gleichzeitig in der Lage ist, vorgegebene Wertebereiche einzuhalten.

Das obige Verfahren kann insbesondere eingesetzt werden, um Ungleichgewicht in den Trainingsdaten eines maschinellen Lernmodells auszugleichen (z.B. um die Anzahl von Negativ-Beispielen zu erhöhen). Beispielsweise kann es zum Training eines maschinellen Lernmodells für die Erkennung von Anomalien in Herstellungsprozessen eingesetzt werden, die Zeitreihen von Sensordaten (z. B. Temperatur, Druck, Kraft, Drehmoment, ...) mit einer starken Diskrepanz zwischen "OK" und "NOK" (anomale, z.B. fehlerhafte Endprodukte) liefern. Modelle zur Erkennung von Anomalien neigen dazu, die feinen Unterschiede zwischen "OK"- und "NOK"-Zeitreihen zu übersehen, wenn sie hauptsächlich auf "OK"-Zeitreihen (also die bei der Herstellung von Endprodukten, die einem Qualitätskriterium genügen, erfasst werden) trainiert werden. Das obige Verfahren erzeugt zusätzliche Trainings-Zeitreihen, indem sie bestehende Trainings-Zeitreihen (also bei Ausführungen des jeweiligen Herstellungsprozesses erfasste Zeitreihen) entlang der Zeit- oder Werteachse(n) verändert. Auf diese Weise kann eine ausgewogenere Menge von Trainings-Eingaben (d.h. Trainings-Zeitreihen) erhalten werden und somit die Generalisierungsfähigkeit des trainierten Modells zur Erkennung von Anomalien verbessert werden. Dasselbe gilt auch für ein maschinelles Lernmodell für die Klassifizierung von Zeitreihen (z. B. wenn zwischen mehr oder weniger häufigen Fehlertypen unterschieden werden muss und eine Überanpassung vermieden werden soll). Das obige Verfahren kann auch nützlich eingesetzt werden, um (durch reale Messungen) erzeugte Trainingsdatensätze zu erweitern, wenn die Datenerfassung (d.h. die Messungen) schwierig oder teuer ist. Zum Beispiel könnten Bedenken hinsichtlich des Datenschutzes es verhindern, umfangreiche Daten von Smart-Home-Geräten zu sammeln. Ebenso könnte die Übertragung von Fahrzeugsensormessungen über eine Cloud zu teuer sein, um Trainingsdaten in großer Menge zu sammeln. Das obige Verfahren ermöglicht es, einen Trainingsdatensatz durch zusätzliche Zeitreihen auf der Grundlage einer kleinen Stichprobe durch reale Messungen (oder allgemein reale Datenerfassung, z.B. Experimente) erzeugter (Basis-Trainings-)Zeitreihen zu ergänzen, vorausgesetzt, diese durch reale Messungen erzeugte Zeitreihen sind repräsentativ. Auf neuronalen Netzen basierende Generierungsansätze erfordern hingegen große Mengen von Trainingsdaten als Basis, um realistische synthetische Zeitreihen zu erzeugen.

Im Folgenden werden verschiedene Ausführungsbeispiele angegeben.

Ausführungsbeispiel 1 ist ein Verfahren zum Trainieren eines maschinellen Lernmodells, wie oben beschrieben.

Ausführungsbeispiel 2 ist das Verfahren nach Ausführungsbeispiel 1, aufweisen Erzeugen der Folge von Gewichten abhängig von mindestens einer Zufallszahl (d.h. eine von einem (ggf. Pseudo-)Zufallszahlengenerator erzeugten Zahl).

Damit kann vermieden werden, dass durch die Erzeugung der zusätzlichen Trainingsbeispiele und deren Verwendung das Training des maschinellen Lernmodells unter einer Tendenz (Bias) leidet, wie sie z.B. auftreten könnte, wenn die zusätzlichen Trainingsbeispiele mittels fester Gewichte erzeugt werden würden.

Ausführungsbeispiel 3 ist das Verfahren nach Ausführungsbeispiel 2, aufweisend Erzeugen der Folge von Gewichten gemäß einer Funktion, die von dem Zeitindex abhängt, wobei die Funktion mindestens einen Parameter aufweist, der abhängig von der mindestens einen Zufallszahl gesetzt wird.

Die Funktion gibt also für jeden Zeitindex ein zugehöriges Gewicht aus und ist zufallsabhängig. Auf diese Weise können die (vom Zufall abhängigen) Gewichte effizient erzeugt werden. Ein Beispiel ist die Erzeugung der Gewichte mittels einer Sinus- oder Kosinusfunktion, deren Phase, Amplitude und/oder Frequenz abhängig von der mindestens einen Zufallszahl gesetzt wird.

Ausführungsbeispiel 4 ist das Verfahren nach einem der Ausführungsbeispiele 1 bis 3, aufweisend Setzen der Zielausgabe des zusätzlichen Trainingsbeispiels auf die Zielausgabe des (ursprünglichen) Trainingsbeispiels abhängig von der Größe der Gewichte.

Beispielsweise wird dasselbe Label verwendet, wenn die Gewichte (oder deren Mittelwert oder Maximalwert beispielsweise) unter einem vorgegebenen Schwellwert liegen und ansonsten wird, beispielsweise bei einer Klassifizierung in zwei Klassen (z.B. "OK" und "NOK") die komplementäre Klasse als Label verwendet. Da die Größe der Gewichte beispielsweise von dem Wert des mindestens einen Parameters der Funktion, mit dem die Gewichte erzeugt werden, abhängen kann (z.B. Mittelwert oder Amplitude eines Sinus), kann die Zielausgabe (Label) auch abhängig von diesem mindestens einem Parameterwert gesetzt werden.

Ausführungsbeispiel 5 ist das Verfahren nach einem der Ausführungsbeispiele 1 bis 4, aufweisend Ermitteln mindestens einer in einem ursprünglichen Trainingsdatensatz, der die Menge von (ursprünglichen) Trainingsbeispielen enthält, unterrepräsentierten Klasse und Erzeugen der zusätzlichen Trainingsbeispiele, sodass sie zu der mindestens einen unterrepräsentierten Klasse gehören (d.h. sodass ihre Zielausgabe eine Angabe der mindestens einen unterrepräsentierten Klasse ist). Der ursprüngliche Trainingsdatensatz wird dann mit den zusätzlichen Trainingsbeispielen zu dem Trainingsdatensatz, mittels dem das maschinelle Lernmodell trainiert wird, ergänzt.

Auf diese Weise kann ein Ungleichgewicht in Trainingsbeispielen ausgeglichen werden (z.B. ein Übergewicht von "OK"-Trainingsbeispielen gegenüber "NOK"-Trainingsbeispielen). Dazu werden die Gewichte geeignet gewählt, um Trainingsbeispiele für die unterrepräsentierte Klasse zu erzeugen.

Ausführungsbeispiel 6 ist ein Verfahren zum Klassifizieren von Sensordaten, aufweisend Trainieren eines maschinellen Lernmodells gemäß einem der Ausführungsbeispiele 1 bis 5, wobei die Menge von (ursprünglichen) Trainingsbeispielen anhand von zuvor klassifizierten (erfassten, d.h. gemessenen) Sensordaten erzeugt wird (d.h. z.B.

auf der Grundlage von vorhergehenden Herstellungsprozessen, bei dem Endprodukte manuelle klassifiziert wurden), Erfassen von Sensordaten und Klassifizieren der erfassten Sensordaten unter Verwendung des maschinellen Lernmodells.

Ausführungsbeispiel 7 ist ein Datenverarbeitungseinrichtung, eingerichtet zum Durchführen eines Verfahrens nach einem der Ausführungsbeispiele 1 bis 6.

Ausführungsbeispiel 8 ist ein Computerprogramm mit Befehlen, die, wenn sie durch einen Prozessor ausgeführt werden, bewirken, dass der Prozessor ein Verfahren nach einem der Ausführungsbeispiele 1 bis 6 durchführt.

Ausführungsbeispiel 9 ist ein computerlesbares Medium, das Befehle speichert, die, wenn sie durch einen Prozessor ausgeführt werden, bewirken, dass der Prozessor ein Verfahren nach einem der Ausführungsbeispiele 1 bis 6 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.

Figur 1     veranschaulicht einen Herstellungs- oder Verarbeitungsprozess.

Figur 2     veranschaulicht die Erzeugung einer zusätzlichen Trainings-Zeitreihe aus einer Basis-Trainings-Zeitreihe durch Verzerrung der Zeitachse.

Figur 3     veranschaulicht die Erzeugung einer zusätzlichen Trainings-Zeitreihe aus einer Basis-Trainings-Zeitreihe durch Verzerrung der Wertachse.

Figur 4     zeigt ein Ablaufdiagramm, das ein Verfahren zum Trainieren eines maschinellen Lernmodells zum Klassifizieren von Zeitreihen von Sensordaten gemäß einer Ausführungsform darstellt.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

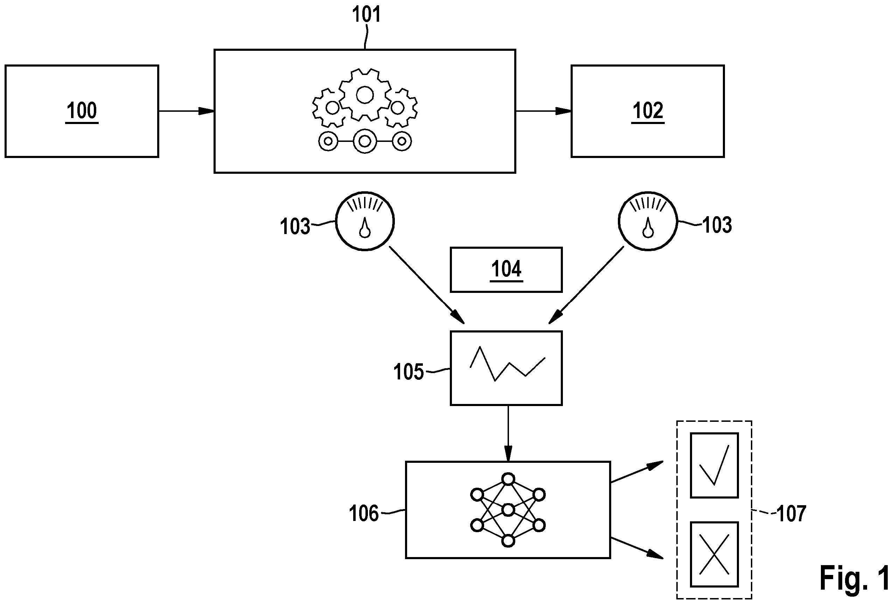

Figur 1 veranschaulicht einen Herstellungs- oder Verarbeitungsprozess.

Ein oder mehrere Eingangsprodukte (z.B. Materialien für die Herstellung) 100 werden einer Verarbeitungskette 101 zugeführt, die verschiedene Maschinen, Roboter etc. enthält. Die Verarbeitungskette 101 führt einen physikalischen und/oder chemischen Fertigungsprozess durch und erzeugt ein Endprodukt 102, z.B. ein bestimmtes Bauteil.

Nach der Herstellung des Endprodukts 102 muss entschieden werden, ob es Qualitätsanforderungen genügt oder beispielsweise fehlerhaft ist. Dies kann anhand von Sensoren 103 gelieferten Sensordaten 104 geschehen, wobei die Sensordaten 104 sowohl Messungen beim Fertigungsprozess als auch des Endprodukts enthalten können.

Für jedes Endprodukt 102 kann so eine Zeitreihe 105 von Sensordatenelementen erfasst werden, z.B. wenn der Fertigungsprozess über eine gewisse Zeit (die zur Herstellung des Endprodukts 102 nötig ist) beobachtet wird, wie beispielsweise der Verlauf einer Temperatur, eines Drucks, einer Kraft (z.B. beim Eindrehen einer Schraube) etc. Die Zeitreihe 105 hat ein Sensordatenelement (z.B. einen Messwert oder einen Vektor von Messwerten, z.B. für Temperatur, Kraft und Druck) für jeden Zeitindex einer Folge aufsteigender Zeitindizes. Es sollte beachtet werden, dass der Zeitindex nicht mit einer Realzeit identisch zu sein braucht. Beim Eindrehen einer Schraube kann der Zeitindex beispielsweise auch sein, wie weit die Schraube reingedreht ist (oder um welchen Winkel sie gedreht wurde): Ist die Drehgeschwindigkeit variabel, muss dies nicht Eins-zu-Eins der realen Zeit entsprechen. Nichtsdestotrotz liefert auch dies eine monoton steigende Folge von "Zeit"-Indizes.

Anhand der für ein Endprodukt 102 erfassten Zeitreihe kann eingeschätzt werden, ob das Endprodukt einem Qualitätskriterium genügt. Beispielsweise darf die Temperatur einen bestimmten Grenzwert überschreiten, sonst ist das Endprodukt 102 fehlerhaft. Die Zusammenhänge können aber auch erheblich komplizierter sein, z.B. ist eine hohe Temperatur akzeptabel, wenn dafür der Druck auch währenddessen oder später einen gewissen Wert hat. Um bei solchen komplizierteren Zusammenhänge zu ermitteln (oder vorherzusagen), ob das Endprodukt 102 fehlerhaft ist (und aussortiert werden sollte oder bestimmten Tests unterzogen werden sollte), kann ein maschinelles Lernmodell 106, speziell ein Klassifizierungs- oder Anomalieerkennungsmodell, z.B. ein neuronales Netz, verwendet werden, das für ein Endprodukt 102 die jeweilige dafür erfasste Zeitreihe 105 als Eingabe erhält, verarbeitet und als Ergebnis der Verarbeitung einer Vorhersage 107 darüber trifft, ob das Endprodukt 102 einem Qualitätskriterium genügt (z.B. fehlerhaft ist oder nicht).

Dazu muss das maschinelle Lernmodell 106 geeignet trainiert werden. Dies kann mittels Trainingsbeispielen für überwachtes Training geschehen, die jeweils eine Trainings-Eingabe (Zeitreihe von Sensordaten) und eine Grund-Truth-Informationen, d.h. eine Kennzeichnung ("Label"), ob ein jeweiliges Endprodukt, das bei einem Fertigungsprozess, bei dem die Trainings-Eingabe als Sensordaten erfasst wird, dem Qualitätskriterium genügt oder nicht, z.B. "OK" oder "NOK". Solche Trainingsdaten können anhand von Durchführungen des Fertigungsprozesses, bei denen das Endprodukt 102 untersucht wird, um das Label zu bestimmen, erzeugt werden.

Fertigungsprozesse neigen jedoch dazu, Zeitreihen von Sensordaten mit sehr unausgewogenen Kennzeichnungen (d.h. Labels) zu liefern. Zum Beispiel gibt es in der Regel viel mehr Ausführungen des Fertigungsprozesses bzw. des resultierenden Endprodukts, die als "OK" gekennzeichnet sind, als solche, die als "NOK" gekennzeichnet sind.

Klassifizierungs- oder Anomalieerkennungsmodelle, die mit solchen Zeitreihen als Trainingsbeispiele trainiert werden, passen sich oft zu sehr der überrepräsentierten Klasse (also "OK" im vorliegenden Beispiel) an. Eine Möglichkeit, um solchen Ungleichgewichten zu begegnen, ist die Augmentierung der Trainings-Eingaben, d.h. im vorliegenden Fall der Zeitreihen, die als Trainings-Eingaben dienen.

Für Trainings-Eingaben können Zeitreihen synthetisch generieren, z. B. durch den Einsatz von Oversampling-Techniken wie SMOTE (Synthetic Minority Oversampling Technique) oder spezialisierten GAN(Generative Adversarial Network)-Architekturen. Diese Ansätze befassen sich jedoch meist mit der Synthetisierung "klassischer" kontinuierlicher und oft stationärer Zeitreihen (d.h. Zeitreihen, die um Mittelwerte fluktuieren, wie z.B. EKG-Kurven). Fertigungsprozesse hingegen produzieren in der Regel wiederholbare Zeitreihen, d. h. Zeitreihen, die einer glatten allgemeinen Form folgen, die durch den zugrunde liegenden physikalischen Prozess vorgegeben ist (z.B. einer stetig zunehmenden Temperatur oder Kraft). Das Unterscheidungsmerkmal zwischen einer NOK-Zeitreihe (d.h. einer Zeitreihe, die als NOK zu klassifizieren ist) und einer OK-Zeitreihe liegt hier oft in der Abweichung der NOK-Zeitreihe von dieser allgemeinen Form.

In Anbetracht des Obigen werden gemäß verschiedenen Ausführungsformen zusätzliche Trainingsbeispiele auf der Grundlage von auf Verzerrungen basierenden Augmentierungsmethoden für Zeitreihen erzeugt. Die Zeitreihen können mehrdimensional sein, d.h. jedes Sensordatenelement kann ein Vektor von Werten (insbesondere Messwerten) sein.

Gemäß verschiedenen Ausführungsformen werden also (ggf. mehrdimensionale) Zeitreihen aus einem Trainingsdatensatz (d.h. Trainings-Zeitreihen, die als Trainings-Eingaben für das Training eines maschinellen Lernmodells verwendet werden können) verzerrungsbasiert augmentiert, um den Trainingsdatensatz zu erweitern. Dazu werden gegebene Trainings-Zeitreihen entlang der Zeit- und/oder Raumachse (d.h. Werteachse) gestaucht und/oder gestreckt (z.B. in manchen Bereichen gestaucht und in anderen gestreckt) um zusätzliche (synthetische) Trainings-Zeitreihen zu erzeugen. Ob die Stauchung in der Zeit- und/oder Raumachse erfolgt, kann beispielsweise zufällig ausgewählt werden (z.B. pro zusätzlicher Trainings-Zeitreihe, die erzeugt werden soll).

Somit gibt es drei mögliche Implementierungen der Erzeugung einer zusätzlichen Trainings-Zeitreihe (aus einer "Basis-"Trainings-Zeitreihe):

- Zeitliche Verzerrung (d.h. Verzerrung der Zeitachse): Um eine zusätzliche Trainings-Zeitreihe aus einer Trainings-Zeitreihe zu erzeugen, wird diese entlang der Zeitachse geändert, d.h. ihre Zeitindizes werden verändert (während die zugehörigen Sensordatenelemente gleich bleiben). Intuitiv führt der Ansatz (z.B. zufällige) "Beschleunigungen" und "Verlangsamungen" ein.
- Verzerrung im Wertebereich (d.h. Verzerrung der Werteachse(n)): Um eine zusätzliche Trainings-Zeitreihe aus einer Trainings-Zeitreihe zu erzeugen, wird diese entlang der Werteachse(n) des (ggf. multidimensionalen) Wertebereichs verändert. Intuitiv schwächt dieser Ansatz bestehende Unterschiede zwischen aufeinanderfolgenden Messungen innerhalb einer Zeitreihe ab und/oder hebt sie hervor.
- Kombination aus zeitlicher Verzerrung und Verzerrung im Wertebereich: Um eine zusätzliche Trainings-Zeitreihe aus einer Trainings-Zeitreihe zu erzeugen, wird diese sowohl entlang der Zeitachse als auch entlang der Werteachse(n) geändert, d.h. sowohl Zeitachse als auch Werteachse(n) werden verzerrt.

Alle drei Möglichkeiten erlauben die Erzeugung zusätzlicher Zeitreihen auf interpretierbare, realistische und effiziente Weise.

Gemäß verschiedenen Ausführungsformen wird eine zusätzliche Trainings-Zeitreihe für einen (Basis-)Trainingsdatensatz wie folgt erzeugt:

- Zufälliges Ziehen (Sampeln) einer Zeitreihe aus dem Trainingsdatensatz
- Ermitteln der Inkremente (d.h. der Folge von Inkrementen) der gezogenen Zeitreihe

  ◦ Option 1: auf der Zeitachse
  ◦ Option 2: auf der Wertachse (oder den Wertachsen; in diesem Fall ergibt sich eine Folgen von Inkrementen pro Wertachse)

- Ermitteln der Gewichte (gleiche Anzahl wie Anzahl der ermittelten Inkremente (d.h. die pro Achse ermittelt wurden)), d.h. es wird eine Folge von Gewichten passend zu der Folge von Inkrementen (oder den Folgen von Inkrementen bei Option 2 mit mehreren Wertachsen ermittelt). Die Gewichte werden z.B. aus einer Sinuskurve mit einem festen Mittelwert bei 1 ermittelt (sodass garantiert ist, dass die Gewichte positiv sind). Die Frequenz und die Phase der Sinuskurve werden z.B. zufällig zwischen 0 und $2\pi$ gewählt. Die Amplitude bewegt sich z.B. zwischen 0 und 1 (kann aber durch einen Hyperparameter eingestellt werden). Falls der Betrag der Abweichung des Mittelwerts der Gewichte von 1 über einem Bereichslimit (Hyperparameter) liegt, werden die ermittelten Gewichte neu/anders skaliert, um das Bereichslimit einzuhalten.

- Die ermittelten Inkremente werden mit den ermittelten Gewichten multipliziert. Dies erfolgt elementweise entlang der Folge(n) von Inkrementen und der Folge von Gewichten, d.h. das erste ermittelte Inkrement (ggf. pro Achse im Falle, dass Option 2 verwendet wird und es mehrere Wertachsen gibt) wird mit dem ersten Gewicht multipliziert, das zweite Inkrement mit dem zweiten Gewicht usw.
- Ausgabe der erzeugten Trainings-Zeitreihe

  ◦ Für Option 1: Setzen der Zeitindizes der erzeugten Trainings-Zeitreihe, z.B. gemäß Zeitindex[i] = kumulative_Summe_bis_i(gewichtete zeitliche Inkremente) + Zeintindex[0] Ausgabe der Zeitreihe mit den so gesetzten Zeitindizes.
  ◦ Für Option 2: - Berechnung der Werte der neu erzeugten Trainings-Zeitreihe (ggf. pro Wertachse), z.B. gemäß Wert[i]= kumulative_Summe_bis_i(gewichtete Wertinkremente) + Wert[0] Ausgabe der Zeitreihe mit den so gesetzten Zeitindizes.

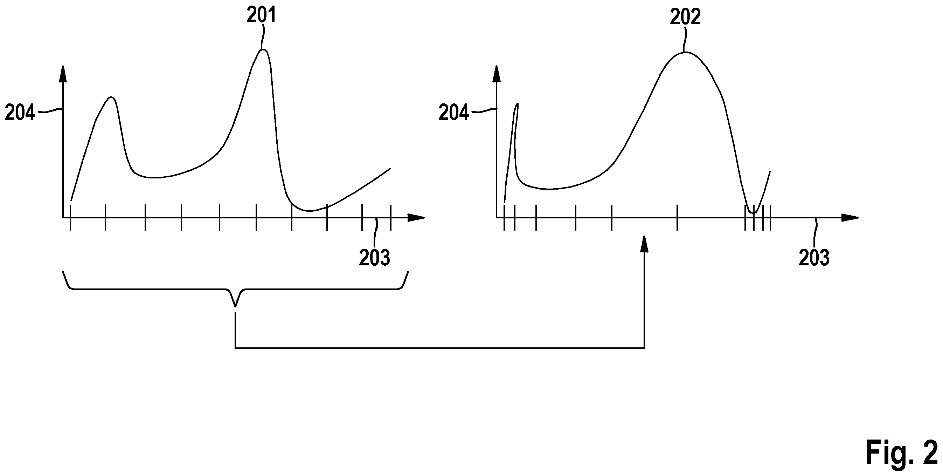

Figur 2 veranschaulicht die Erzeugung einer zusätzlichen Trainings-Zeitreihe 202 aus einer Basis-Trainings-Zeitreihe 201, z.B. aus einer (durch reale Messungen) erfassten Trainings-Zeitreihe, durch Verzerrung der Zeitachse 203, d.h. Änderung der zeitlichen Inkremente (d.h. Option 1). Eine Verzerrung entlang der Wertachse 204 erfolgt in diesem Beispiel nicht.

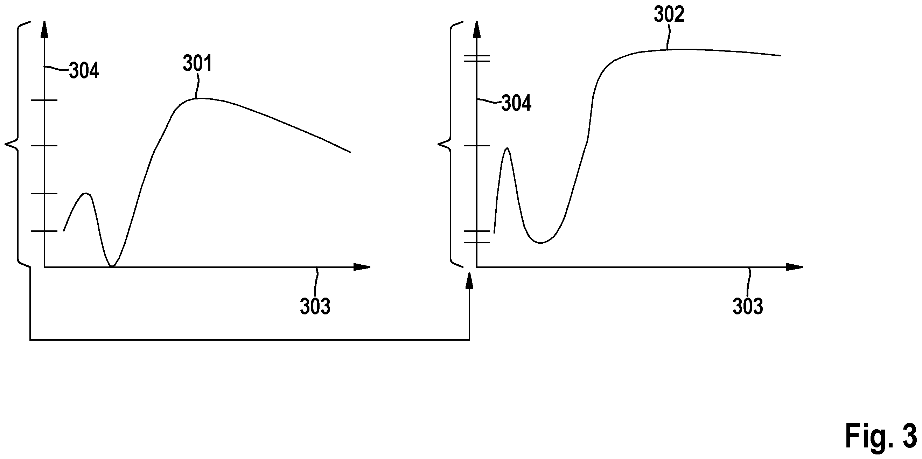

Figur 3 veranschaulicht die Erzeugung einer zusätzlichen Trainings-Zeitreihe 302 aus einer Basis-Trainings-Zeitreihe 301, z.B. aus einer (durch reale Messungen) erfassten Trainings-Zeitreihe, durch Verzerrung der Wertachse 304, d.h.

Änderung der Wert-Inkremente (d.h. Option 2). Eine Verzerrung entlang der Zeitachse 303 erfolgt in diesem Beispiel nicht.

Ist die Zeitreihe mehrdimensional, so werden beispielsweise für alle Wertachsen dieselben Gewichte verwendet.

In Figur 2 und 3 sind die Zeitreihen zur besseren Anschaulichkeit kontinuierlich dargestellt, sie enthalten aber nur Wert für die jeweiligen Zeitindizes.

Für eine Kombination aus zeitlicher Verzerrung und Verzerrung im Wertebereich wird beispielsweise erst Option 1 angewendet, gefolgt von Option 2 (oder umgekehrt).

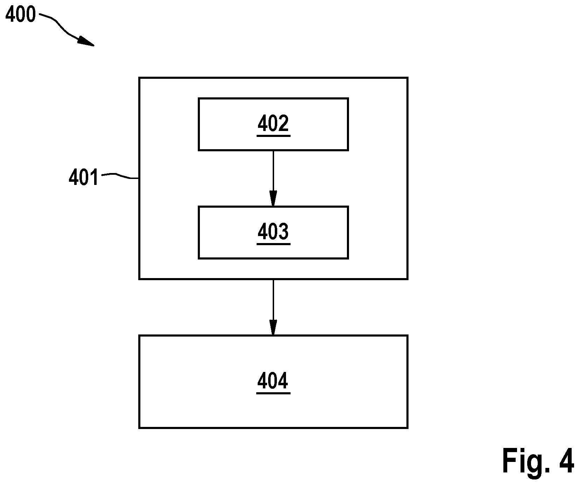

Zusammengefasst wird gemäß verschiedenen Ausführungsformen ein Verfahren bereitgestellt, wie in Figur 4 dargestellt.

Figur 4 zeigt ein Ablaufdiagramm 400, das ein Verfahren zum Trainieren eines maschinellen Lernmodells zum Klassifizieren von Zeitreihen von Sensordaten (d.h. sodass es Zeitreihen von Sensordaten klassifiziert) gemäß einer Ausführungsform darstellt.

Für jedes (ursprüngliche oder Basis-)Trainingsbeispiel einer Menge von Trainingsbeispielen, wobei jedes Trainingsbeispiel eine (jeweilige) Trainings-(Eingabe-)Zeitreihe für das maschinelle Lernmodell und eine (jeweilige) Zielausgabe des maschinellen Lernmodells (d.h. eine Grundwahrheit (Ground Truth), d.h. ein Label, das die korrekte Klasse angibt) aufweist, wobei die Trainings-Zeitreihe für jeden Zeitindex einer (jeweiligen) Folge von Zeitindizes einen (jeweiligen) Wert für jede mindestens einer Dimension eines Wertebereichs aufweist, wobei zwei in der Folge von Zeitindizes aufeinanderfolgende Zeitindizes sich um ein (jeweiliges) Zeitinkrement unterscheiden, wird Folgendes durchgeführt:

- Erzeugen, in 401, mindestens eines zusätzlichen Trainingsbeispiels durch, für jedes zusätzliche Trainingsbeispiel, durch

  ◦ In 402 Erzeugen einer Folge von Gewichten, die für jeden Zeitindex der Folge von Zeitindizes ein Gewicht aufweist und
  ◦ In 403 Gewichten

    ▪ für jeden Zeitindex bis auf den letzten Zeitindex der Folge von Zeitindizes (des (ursprünglichen) Trainingsbeispiels), des Zeitinkrements zum auf den Zeitindex folgenden Zeitindex mit dem Gewicht, das die Folge von Gewichten für den Zeitindex aufweist (und Erzeugen einer Folge von Zeitindizes für eine Trainings-Zeitreihe für das zusätzliche Trainingsbeispiel entsprechend der gewichteten Zeitinkrementen (d.h. so, dass sich zwei aufeinanderfolgende Zeitindizes der Folge von Zeitindizes für die Trainings-Zeitreihe für das zusätzliche Trainingsbeispiele um das (jeweilige) gewichtete Zeitinkrement unterscheiden (statt wie in der Zeitreihe des ursprünglichen Trainingsbeispiels um das ursprüngliche, d.h. ungewichtete Zeitinkrement)) und/oder

■ für jeden Zeitindex der Folge von Zeitindizes des (ursprünglichen) Trainingsbeispiels und jede der mindestes einen Dimension des Wertebereichs, des Werts, den die Trainings-Zeitreihe des Trainingsbeispiels für den Zeitindex und für die Dimension mit dem Gewicht, das die Folge von Gewichten für den Zeitindex aufweist (und Verwenden des (jeweiligen) gewichteten Werts anstelle des ungewichteten Werts für die Trainings-Zeitreihe des zusätzlichen Trainingsbeispiels).

In 404 wird das maschinelle Lernmodells mittels eines Trainingsdatensatzes, der mindestens die zusätzlichen Trainingsbeispiele (und optional auch die (ursprünglichen) Trainingsbeispiele und/oder weitere Trainingsbeispiele) enthält, trainiert.

Gemäß verschiedenen Ausführungsformen werden in anderen Worten Zeitinkremente, Wertinkremente oder beides unter Verwendung von Gewichten (z.B. gegeben durch eine zufällig parametrisierte Sinusfunktion) skaliert. Auf diese Weise werden (zufällige) Streckungs- und Stauchungseffekte gegebener Trainingsbeispiele bewirkt, um zusätzliche Trainingsbeispiele zu erzeugen.

Das maschinelle Lernmodell ist beispielsweise ein neuronales Netz. Soll die Option 2 genutzt werden, müsste dieses so ausgestaltet sein, dass sie nicht nur die Werte der Zeitreihe als Eingabe bekommt, sondern auch die Zeitindizes. Alternativ kann auch ein Modell verwendet werden, dass einen Kurvenverlauf widerspiegelt, der an die Trainings-Zeitreihen (z.B. die "OK"-Zeitreihen) gefittet wird (z.B. basierend auf Shapelets oder Wavelets). Eine Anomalie könnte dann entdeckt werden, wenn eine Zeitreihe von dem so gelernten Kurvenverlauf mehr als ein bestimmtes Maß abweicht (z.B. hinsichtlich der maximalen Abweichung über die Zeitindizes).

Das Verfahren von Figur 4 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

Das Verfahren ist also gemäß verschiedenen Ausführungen insbesondere computerimplementiert.

Die Sensordaten können verschiedene Daten sein, die von mindestens einem Sensor gewonnen werden. Der mindestens eine Sensor kann (insbesondere für das Sammeln der Trainingsbeispiele) Messungen der Umgebung in Form von Sensorsignalen ermitteln, um eine ein- oder mehrdimensionale Zeitreihe zu liefern, z.B. für jede Wiederholung eines wiederholbaren Prozesses (z.B. einem Press- oder Schraubvorgang).

Das maschinelle Lernmodell kann nach dem Training auf Sensordaten angewendet werden, die von dem mindestens einem Sensor ermittelt werden. Es dient zur Analyse der Sensordaten, z.B. für die Anomalie-Erkennung, d.h. um Anomalien in einem technischen System zu erkennen (insbesondere eine Anomalie eines Endprodukts eines Herstellungsprozesses). Das technische System kann dann unter Verwendung von Ergebnissen der Analyse gesteuert werden.

Dazu wird ein gegebenen Zeitreihendatensatz erweitert, um dessen Größe zu erhöhen und/oder ihn ausgeglichener zu machen (z.B. "OK"/"NOK"-Zeitreihen). Das Training eines Anomalieerkennungs- oder Klassifizierungsmodells auf dem so erweiterten Trainingsdatensatz verbessert seine Leistung im Vergleich zum Training auf dem nur durch reale Messungen erfassten Trainings-Zeitreihen.

**Patentansprüche**

**1.** Verfahren zum Trainieren eines maschinellen Lernmodells (106) zum Klassifizieren von Zeitreihen von Sensordaten, aufweisend:

Für jedes Trainingsbeispiel einer Menge von Trainingsbeispielen, wobei jedes Trainingsbeispiel eine Trainings-Zeitreihe (201, 301) für das maschinelle Lernmodell (106) und eine Zielausgabe des maschinellen Lernmodells (106) aufweist, wobei die Trainings-Zeitreihe (201, 301) für jeden Zeitindex einer Folge von Zeitindizes einen Wert für jede mindestens einer Dimension eines Wertebereichs aufweist, wobei zwei in der Folge von Zeitindizes aufeinanderfolgende Zeitindizes sich um ein Zeitinkrement unterscheiden,
Erzeugen (401) mindestens eines zusätzlichen Trainingsbeispiels durch, für jedes zusätzliche Trainingsbeispiel,

Erzeugen (402) einer Folge von Gewichten, die für jeden Zeitindex der Folge von Zeitindizes ein Gewicht aufweist;
Gewichten (403), für jeden Zeitindex bis auf den letzten Zeitindex der Folge von Zeitindizes, des Zeitinkrements zum auf den Zeitindex folgenden Zeitindex mit dem Gewicht, das die Folge von Gewichten für den Zeitindex aufweist und/oder Gewichten (403), für jeden Zeitindex der Folge von Zeitindizes des Trainingsbeispiels und jede der mindestes einen Dimension des Wertebereichs, des Werts, den die Trainings-Zeitreihe (201, 301) des Trainingsbeispiels für den Zeitindex und für die Dimension mit dem Gewicht, das die Folge von Gewichten für den Zeitindex aufweist; und
Trainieren (404) des maschinellen Lernmodells (106) mittels eines Trainingsdatensatzes, der mindestens die zusätzlichen Trainingsbeispiele enthält.

2. Verfahren nach Anspruch 1, aufweisen Erzeugen der Folge von Gewichten abhängig von mindestens einer Zufallszahl.

3. Verfahren nach Anspruch 2, aufweisend Erzeugen der Folge von Gewichten gemäß einer Funktion, die von dem Zeitindex abhängt, wobei die Funktion mindestens einen Parameter aufweist, der abhängig von der mindestens einen Zufallszahl gesetzt wird.

4. Verfahren nach einem der Ansprüche 1 bis 3, aufweisend Setzen der Zielausgabe des zusätzlichen Trainingsbeispiels auf die Zielausgabe des Trainingsbeispiels abhängig von der Größe der Gewichte.

5. Verfahren nach einem der Ansprüche 1 bis 4, aufweisend Ermitteln mindestens einer in einem ursprünglichen Trainingsdatensatz, der die Menge von Trainingsbeispielen enthält, unterrepräsentierten Klasse und Erzeugen der zusätzlichen Trainingsbeispiele, sodass sie zu der mindestens einen unterrepräsentierten Klasse gehören.

6. Verfahren zum Klassifizieren von Sensordaten (104), aufweisend:

Trainieren eines maschinellen Lernmodells (106) gemäß einem der Ansprüche 1 bis 5, wobei die Menge von Trainingsbeispielen anhand von zuvor klassifizierten Sensordaten erzeugt wird;
Erfassen von Sensordaten (103);
Klassifizieren der erfassten Sensordaten (103) unter Verwendung des maschinellen Lernmodells (106).

7. Datenverarbeitungseinrichtung, eingerichtet zum Durchführen eines Verfahrens nach einem der Ansprüche 1 bis 6.

8. Computerprogramm mit Befehlen, die, wenn sie durch einen Prozessor ausgeführt werden, bewirken, dass der Prozessor ein Verfahren nach einem der Ansprüche 1 bis 6 durchführt.

9. Computerlesbares Medium, das Befehle speichert, die, wenn sie durch einen Prozessor ausgeführt werden, bewirken, dass der Prozessor ein Verfahren nach einem der Ansprüche 1 bis 6 durchführt.

**Geänderte Patentansprüche gemäss Regel 137(2) EPÜ.**

1. Verfahren zum Trainieren eines maschinellen Lernmodells (106) zum Klassifizieren von Zeitreihen von Sensordaten, aufweisend:

Für jedes Trainingsbeispiel einer Menge von Trainingsbeispielen die in einem Trainingsdatensatz enthalten sind, wobei jedes Trainingsbeispiel eine Trainings-Zeitreihe (201, 301) für das maschinelle Lernmodell (106) und eine Zielausgabe des maschinellen Lernmodells (106) aufweist, wobei die Trainings-Zeitreihe (201, 301) für jeden Zeitindex einer Folge von Zeitindizes einen Wert für jede mindestens einer Dimension eines Wertebereichs aufweist, wobei zwei in der Folge von Zeitindizes aufeinanderfolgende Zeitindizes sich um ein Zeitinkrement unterscheiden,

Ermitteln mindestens einer unterrepräsentierten Klasse in dem Trainingsdatensatz, Erzeugen (401) mindestens eines zusätzlichen Trainingsbeispiels das zu der mindestens einen unterrepräsentierten Klasse gehört, durch, für jedes zusätzliche Trainingsbeispiel,

Erzeugen (402) einer Folge von Gewichten, die für jeden Zeitindex der Folge von Zeitindizes ein Gewicht aufweist;

Gewichten (403), für jeden Zeitindex bis auf den letzten Zeitindex der Folge von Zeitindizes, des Zeitinkrements zum auf den Zeitindex folgenden Zeitindex mit dem Gewicht, das die Folge von Gewichten für den Zeitindex aufweist und/oder Gewichten (403), für jeden Zeitindex der Folge von Zeitindizes des Trainingsbeispiels und jede der mindestens einen Dimension des Wertebereichs, des Werts, den die Trainings-Zeitreihe (201, 301) des Trainingsbeispiels für den Zeitindex und für die Dimension mit dem Gewicht, das die Folge von Gewichten für den Zeitindex aufweist; und

Trainieren (404) des maschinellen Lernmodells (106) mittels eines Trainingsdatensatzes, der mindestens die zusätzlichen Trainingsbeispiele enthält.

2. Verfahren nach Anspruch 1, aufweisen Erzeugen der Folge von Gewichten abhängig von mindestens einer Zufallszahl.

3. Verfahren nach Anspruch 2, aufweisend Erzeugen der Folge von Gewichten gemäß einer Funktion, die von dem Zeitindex abhängt, wobei die Funktion mindestens einen Parameter aufweist, der abhängig von der mindestens einen Zufallszahl gesetzt wird.

4. Verfahren nach einem der Ansprüche 1 bis 3, aufweisend Setzen der Zielausgabe des zusätzlichen Trainingsbeispiels auf die Zielausgabe des Trainingsbeispiels abhängig von der Größe der Gewichte.

5. Verfahren zum Klassifizieren von Sensordaten (104), aufweisend:

Trainieren eines maschinellen Lernmodells (106) gemäß einem der Ansprüche 1 bis 4, wobei die Menge von Trainingsbeispielen anhand von zuvor klassifizierten Sensordaten erzeugt wird;
Erfassen von Sensordaten (103);
Klassifizieren der erfassten Sensordaten (103) unter Verwendung des maschinellen Lernmodells (106).

6. Datenverarbeitungseinrichtung, eingerichtet zum Durchführen eines Verfahrens nach einem der Ansprüche 1 bis 5.

7. Computerprogramm mit Befehlen, die, wenn sie durch einen Prozessor ausgeführt werden, bewirken, dass der Prozessor ein Verfahren nach einem der Ansprüche 1 bis 5 durchführt.

8. Computerlesbares Medium, das Befehle speichert, die, wenn sie durch einen Prozessor ausgeführt werden, bewirken, dass der Prozessor ein Verfahren nach einem der Ansprüche 1 bis 5 durchführt.

**Fig. 1**

100

101

102

103

103

104

105

106

107

Fig. 2

Fig. 3

Fig. 4

Europäisches
Patentamt

European
Patent Office

Office européen
des brevets

## EUROPÄISCHER RECHERCHENBERICHT

Nummer der Anmeldung

EP 24 18 0302

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BRIAN KENJI IWANA ET AL: "An Empirical Survey of Data Augmentation for Time Series Classification with Neural Networks", ARXIV.ORG, CORNELL UNIVERSITY LIBRARY, 201 OLIN LIBRARY CORNELL UNIVERSITY ITHACA, NY 14853, 2. Juli 2021 (2021-07-02), XP081999863, | 1-5,7-9 | INV. G06N3/09 G06N20/00 |
| Y | * Abschnitte 1,2.1.1, 2.1.3, 2.2.3, 6.1, 6.2, 7,7.2.6, 8; Seiten 1,6; Tabellen 1-3 * ----- | 6 | |
| Y | DE 10 2021 211610 A1 (BOSCH GMBH ROBERT [DE]) 20. April 2023 (2023-04-20) * Absätze [0003], [0004]; Anspruch 1 * ----- | 6 | |
| A | QINGSONG WEN ET AL: "Time Series Data Augmentation for Deep Learning: A Survey", ARXIV.ORG, CORNELL UNIVERSITY LIBRARY, 201 OLIN LIBRARY CORNELL UNIVERSITY ITHACA, NY 14853, 28. Februar 2020 (2020-02-28), XP081610124, * Abschnitte 5.2,5.3 * ----- | 1-9 | |

RECHERCHIERTE SACHGEBIETE (IPC)

G06N

Der vorliegende Recherchenbericht wurde für alle Patentansprüche erstellt

| Recherchenort | Abschlußdatum der Recherche | Prüfer |
|---|---|---|
| München | 14. November 2024 | Thielemann, Benedikt |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

..........................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 0302

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-11-2024

| Im Recherchenbericht angeführtes Patentdokument | Datum der Veröffentlichung | Mitglied(er) der Patentfamilie | Datum der Veröffentlichung |
|---|---|---|---|
| DE 102021211610 A1 | 20-04-2023 | KEINE | |

Für nähere Einzelheiten zu diesem Anhang : siehe Amtsblatt des Europäischen Patentamts, Nr.12/82

EPO FORM P0461